Europäisches Patentamt

European Patent Office

Office européen des brevets

(11) Publication number: **0 489 296 A1**

# EUROPEAN PATENT APPLICATION

(21) Application number: **91119670.7**

(22) Date of filing: **18.11.91**

(51) Int. Cl.⁵: **F16K 5/06, F16K 5/10**

(30) Priority: **03.12.90 JP 401520/90**
**08.05.91 JP 31401/91**
**04.07.91 JP 51769/91**

(43) Date of publication of application:
**10.06.92 Bulletin 92/24**

(84) Designated Contracting States:
**DE FR GB IT**

(71) Applicant: **NIKKO TOKUSHU VALVE CO., LTD.**
**17-9, Kikawahigashi 4-chome, Yodogawa-ku,**
**Osaka-city, Osaka-fu, 532(JP)**

(72) Inventor: **Yokomoto, Hideki**
**14-5, Suzutani, Okukaiinji**
**Nagaokakyo-city, Kyoto-fu(JP)**
Inventor: **Nitta, Yuji**
**236, Iwahara**
**Minamiashigara-city, Kanagawa-ken(JP)**

(74) Representative: **Patentanwälte Grünecker,**
**Kinkeldey, Stockmair & Partner**
**Maximilianstrasse 58**
**W-8000 München 22(DE)**

(54) **Ball valve assembly with flow regulating mechanism.**

(57) There is provided a ball valve assembly with a flow regulating mechanism, having a flow passage opening/closing function of a ball valve itself and a flow regulating function for defining a magnitude of an opening of a flow passage, there functions being effected independently each other.

Flow regulation can be effected by a gate valve (or a flow regulating rod), so that a flow repeatability after adjustment of a flow rate can be ensured. Further, the flow rate can be regulated in a range such that no water hammer occurs even when rapidly opening or closing the ball valve, thereby extending a service life of the ball valve.

FIG.1

[Technical Field]

The present invention relates to a ball valve assembly with a flow regulating mechanism adapted to be mounted in a flow passage of fluid, and more particularly to an improvement in a ball valve.

[Background Art]

A ball valve can be fully opened and closed easily, quickly, and securely, but it is difficult to carry out flow regulation, causing much time required for repeating a flow rate upon re-opening of the flow passage after fully closing same.

As a technique for solving this problem, it is known that two valves are mounted in tandem in a flow passage, one being dedicated to open and close the flow passage, the other being dedicated to regulate a flow rate.

A conventional ball valve can be fully opened and closed easily by about 90° rotation thereof. However, even slight rotation causes a large change in opening degree. For this reason, flow regulation is difficult and water hammer is apt to occur in a ball valve as compared with a general gate valve or glove valve.

Further, flow regulation in a ball valve is effected by changing an opening angle of a valve portion as similar to a gate valve or glove valve. Accordingly, long-term usage causes the generation of erosion due to cavitation at a sealing portion, resulting in a reduction in sealing function to cause a leakage of fluid in a full closed condition of the ball valve.

[Disclosure of the Invention]

The present invention has been accomplished to solve the above-mentioned problems in the prior art, and it is an object of the present invention to provide a ball valve assembly with a flow regulating mechanism which can easily regulate a flow rate, ensure a flow repeatability upon re-opening of a flow passage after fully closing same, prevent water hammer, and prevent a reduction in ball valve sealing function due to erosion, thereby extending a service life of the ball valve.

The above object is achieved by the following measures according to the present invention. That is, according to a first aspect of the present invention, there is provided a ball valve assembly with a flow regulating mechanism, comprising:

(1) a ball valve for opening and closing a flow passage, said ball valve having a hole extending in a direction intersecting said flow passage and communicating with said flow passage; and

(2) a flow regulating member for restricting an opening of said flow passage, said flow regulating member being inserted in said hole of said ball valve so that a quantity of insertion is variable.

In the ball valve assembly according to the first aspect of the present invention, it is preferable that the flow regulating member is provided in coaxial relationship with a ball valve opening/closing shaft for rotating the ball valve, and is fixed to the ball valve opening/closing shaft. It is also preferable that the flow regulating member is provided on the opposite side of the ball valve opening/closing shaft with respect to the flow passage, and is fixed independently of the ball valve opening/closing shaft.

According to a second aspect of the present invention, there is provided a ball valve assembly with a flow regulating mechanism, comprising:

(1) a ball valve for opening and closing a flow passage, said ball valve having a hole extending in a direction intersecting said flow passage and communicating with said flow passage; and

(2) a flow regulating member for regulating an opening of said flow passage, said flow regulating member being rotatably inserted in said hole of said ball valve so that rotation of said flow regulating member causes regulation of the opening of said flow passage.

In the ball valve assembly according to the second aspect of the present invention, it is preferable that the flow regulating member is provided on the opposite side of the ball valve opening/closing shaft with respect to the flow passage, and is fixed independently of the ball valve opening/closing shaft.

With this construction of the ball valve assembly according to the present invention, a flow passage opening/closing function of the ball valve itself and a flow regulating function for defining a magnitude of an opening of the flow passage can be effected independently each other.

As the flow regulating member such as a gate valve or a flow regulating rod is assembled with the ball valve, the flow regulation can be effected by the gate valve or the flow regulating rod. That is, a flow rate in the flow passage in the ball valve can be determined in accordance with an opening degree of the gate valve or the flow regulating rod. Accordingly, upon re-opening of the ball valve after fully closing same, it is unnecessary to regulate the flow rate. Thus, a flow repeatability can be ensured.

Further, by mounting the gate valve or the flow regulating rod at a central portion of the ball valve, the flow regulation can be effected without changing an opening degree of the ball valve at a sealing portion thereof. Since possible erosion is generated at the central portion of the ball valve where the gate valve or the flow regulating rod is mounted, a sealing mechanism for the ball valve is prevented from being damaged. Accordingly, the sealability can be ensured for a long period of time, and a service life of the ball valve can therefore be extended.

Further, the flow rate can be regulated by the gate valve or the flow regulating rod in the ball valve in a range such that no water hammer occurs even when rapidly opening or closing the ball valve.

[Brief Description of the Drawings]

Fig. 1 is a side elevation in section of the first preferred embodiment of the present invention;

Fig. 2 is a front elevation in section of the first preferred embodiment of the present invention;

Fig. 3 is a perspective view of a ball valve for opening and closing a flow passage and a gate valve for regulating a flow rate shown in Fig. 1;

Fig. 4 is a front elevation of the gate valve in association with the ball valve of the first preferred embodiment of the present invention shown in section;

Fig. 5 is a side elevation in section of the second preferred embodiment of the present invention;

Fig. 6 is a side elevation in section of the third preferred embodiment of the present invention;

Fig. 7 is a perspective view of the first preferred embodiment of a flow regulating rod shown in Fig. 6;

Figs. 8(a), 8(b) and 8(c) are sectional side views illustrating different operational positions of the flow regulating rod shown in Fig. 7 at rotations angles of 0 degree (full open), 45 degrees, and 90 degrees (full closed), respectively, under the condition that a direction of the flow passage in the ball valve is fixed;

Figs. 9(a), 9(b) and 9(c) are cross section taken along the lines A-A in Figs. 8(a), 8(b) and 8(c), respectively;

Figs. 10(a) and 10(b) are perspective views of second and third preferred embodiments of the flow regulating rod shown in Fig. 7;

Figs. 11(a) and 11(b) are sectional side elevations of the flow regulating rod shown in Fig. 10-(a) at the rotational angle of 0 degree, Fig. 11(a) being a cross section taken along the line C-C in Fig. 11(b), Fig. 11(b) being a cross section taken along the line B-B in Fig. 11(a); and

Figs. 12(a), 12(b) and 12(c) are views similar to Figs. 9(a), 9(b) and 9(c), illustrating different operational positions of the flow regulating rod shown in Fig. 10(a) at the rotational angles of 0 degree (full open), 45 degrees, and 90 degrees (full closed), respectively, under the condition that a direction of the flow passage in the ball valve is fixed.

[Best Mode for Carrying Out the Invention]

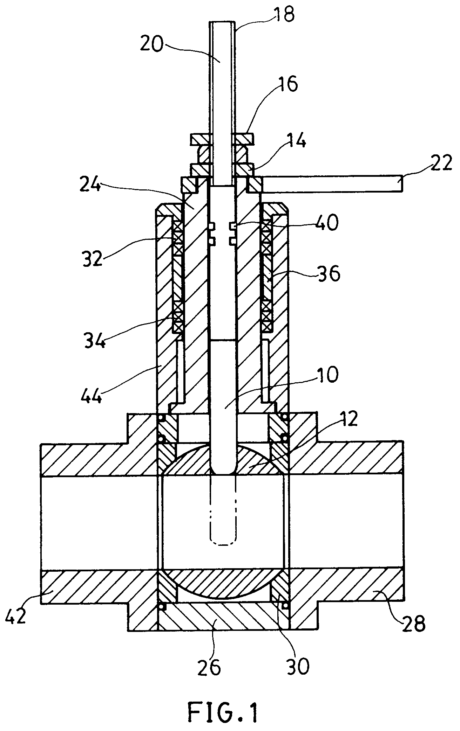

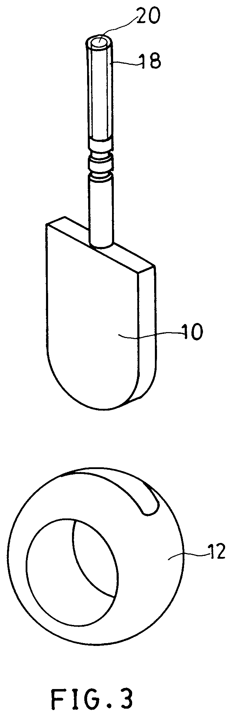

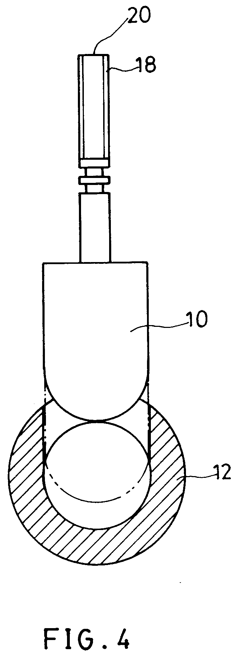

Some preferred embodiments of the present invention will now be described with reference to the drawings. Figs. 1 to 4 show the first preferred embodiment of the present invention. As shown in Figs. 3 and 4, a ball valve 12 for opening and closing a flow passage is provided at its upper portion with a hole communicating with the flow passage. A gate valve 10 for regulating a flow rate is inserted into this hole. A quantity of insertion of the gate valve 10 into the hole is adjusted to thereby regulate the flow rate.

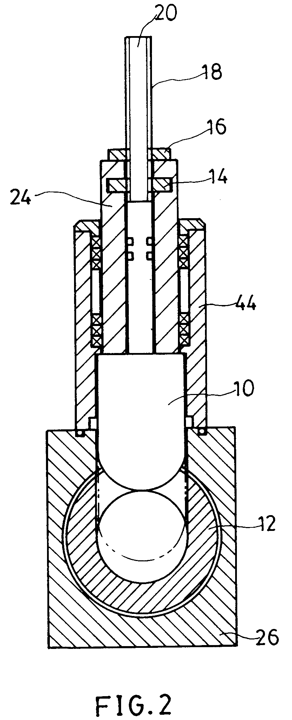

Such a flow regulating mechanism is shown in Figs. 1 and 2. The flow rate of fluid flowing in the flow passage is regulated in the following manner. That is, a fixing nut 16 for fixing the gate valve 10 is first loosened, and a flow regulating nut 14 is then rotated. Accordingly, a vertically moving rod 20 is lifted or lowered through a threaded portion 18 thereof, with the result that the gate valve 10 connected with the vertically moving rod 20 is lifted or lowered to thereby restrict an opening degree of the flow passage in the ball valve 12, thus regulating the flow rate in the flow passage.

In this preferred embodiment, as shown in Figs. 1 and 2, a ball valve opening/closing shaft 24 for opening and closing the ball valve 12 is provided so as to surround the vertically moving rod 20, so that the ball valve 12 and the vertically moving rod 20 (accordingly, the gate valve 10) are rotated together through the ball valve opening/closing shaft 24 by operating a ball valve opening/closing handle 22. The ball valve assembly according to the first preferred embodiment also includes an O-ring 40, packings 32 and 24, packing collar 36, pipe couplings 28 and 42, outer casing 44, and ball valve sealing gasket 30.

Accordingly, the ball valve 12 can be opened and closed irrespectively of an opening degree of the gate valve 10.

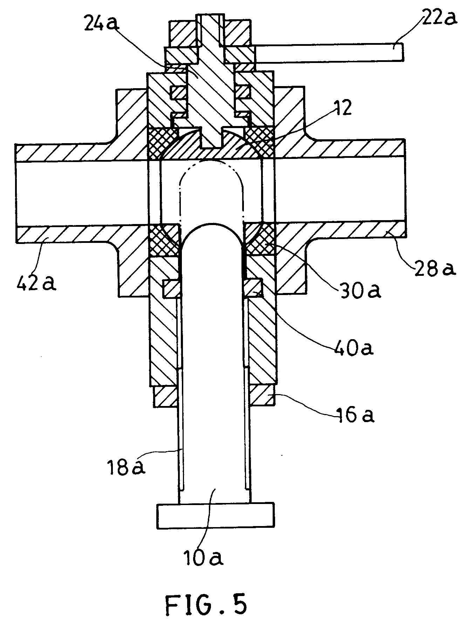

Fig. 5 shows the second preferred embodiment of the present invention. In this preferred embodiment, unlike the gate valve 10 in the first preferred embodiment, a flow regulating rod 10a is provided on the opposite side of a ball valve opening/closing shaft 24a with respect to a ball valve 12. Even when the ball valve 12 is rotated through the ball valve opening/closing shaft 24a by operating a handle 22a, the flow regulating rod 10a is not rotated with the ball valve 12. That is, the flow regulating rod 10a is movable independently of the rotation of the ball valve 12. The flow rate is regulated in the following manner. That is, a fixing nut 16a is first loosened, and is then rotated to vertically move the flow regulating rod 10a through a threaded portion 18a thereof independently of the ball valve 12, thereby regulating the flow rate. The ball valve assembly according to the second preferred embodiment also includes pipe couplings 28a and 42a, ball valve sealing gasket 30a, and O-ring 40a.

Also in this preferred embodiment, the ball valve 12 can be opened and closed irrespective of an opening degree of the flow passage to be regulated by the flow regulating rod 10a.

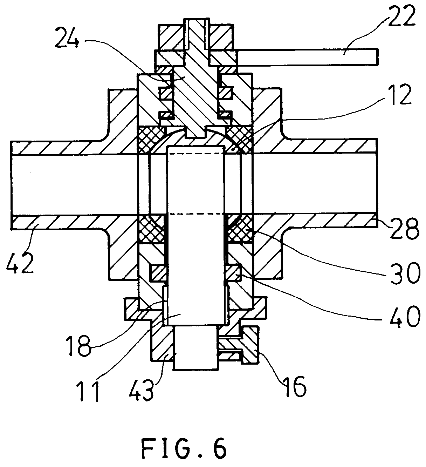

Fig. 6 shows the third preferred embodiment of the present invention in sections side elevation. A projection formed at a lower end of a ball valve opening/closing shaft 24 is coupled with a slit formed at an upper end of a ball valve 12. Accordingly, the ball valve 12 can be rotated through the ball valve opening/closing shaft 24 by operating a handle 22, and the flow passage in the ball valve 12 can therefore be opened and closed. The ball valve 12 is provided with a hole extending in a direction intersecting the flow passage and communicating with the flow passage, and a flow regulating rod 11 is rotatably inserted in this hole. The flow regulating rod 11 is provided in a hole formed on the opposite side of the ball valve opening/closing shaft 24 with respect to the ball valve 12. The flow regulating rod 11 is rotatable independently of the rotation of the ball valve opening/closing shaft 24, and is fixed by a fixing bolt 16. The ball valve assembly according to the third preferred embodiment also includes pipe couplings 28 and 42, ball valve sealing gasket 30, O-ring 40, and stopper 43 for the flow regulating rod 11.

In a loosened condition of the fixing bolt 16, the flow regulating rod 11 can be rotated 360° in the ball valve 12 independently thereof.

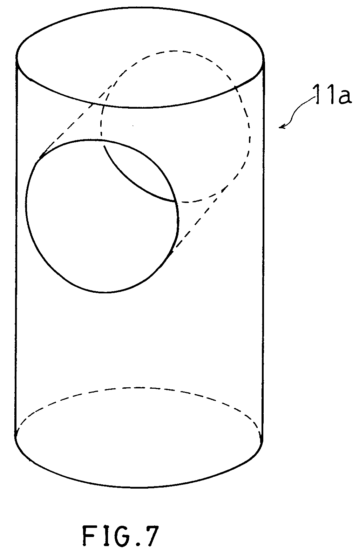

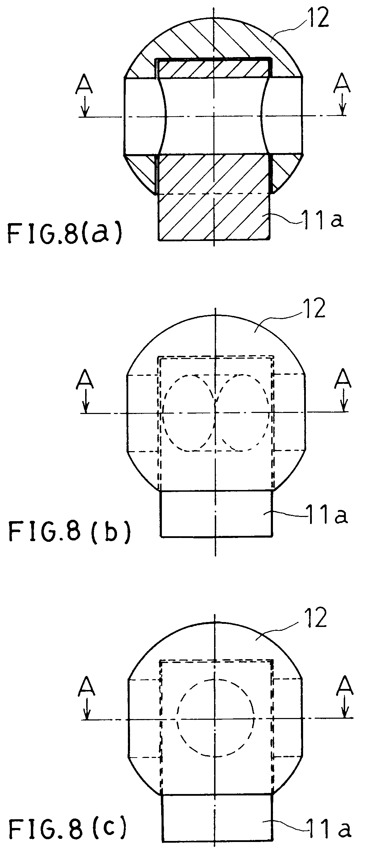

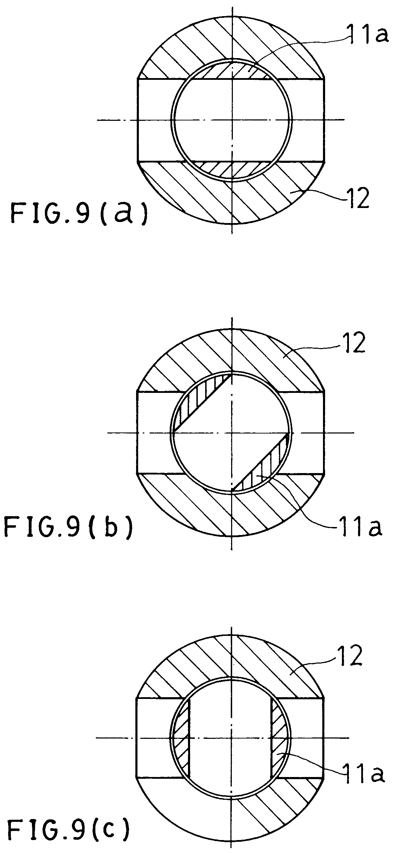

Figs. 7 to 9 show the first preferred embodiment (11a) of the flow regulating rod 11. Referring to Fig. 7 which is a perspective view of the flow regulating rod 11a, it is formed from a columnar rod. The columnar rod is provided at its upper portion with a through hole extending perpendicular to an axial direction of the rod. The rotation of the rod causes a change in opening area of the flow passage in the ball valve 12, thus regulating the flow rate. Figs. 8 and 9 illustrate the operation of flow regulation in the case that a direction of the flow passage in the ball valve 12 is fixed (e.g., left to right or right to left as viewed in Figs. 8 and 9), and a rotations angle of the flow regulating rod 11a is changed.

Figs. 8(a) and 9(a) illustrate an operations position where the rotational angle of the flow regulating rod 11a is 0 degree (full open); Figs. 8(b) and 9(b) illustrate an operations position where the rotational angle is 45 degrees; and Figs. 8(c) and 9(c) illustrate an operations position where the rotational angle is 90 degrees (full closed).

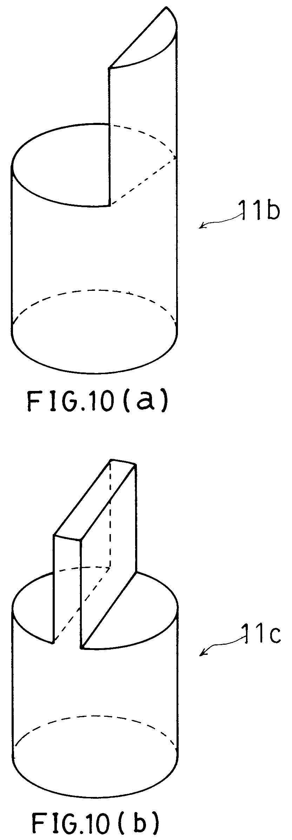

Figs. 10(a) and 10(b) show the second preferred embodiment (11b) and a third preferred embodiment (11c) of the flow regulating rod 11 in perspective. It should be appreciated that the shape of the flow regulating rod 11 is not limited to those shown, but it is sufficient that the rotation of the rod can regulate the opening area of the flow passage in the ball valve.

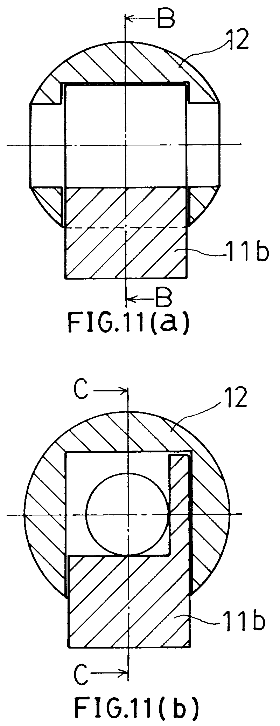

Figs. 11(a) and 11(b) illustrate different sections of the flow regulating rod 11b shown in Fig. 10(a) provided in the ball valve 12 in the operational position where the rotating angle is 0 degree. That is, Fig. 11(a) is a cross section taken along the line C-C in Fig. 11(b), and Fig. 11(b) is a cross section taken along the line B-B in Fig. 11(a).

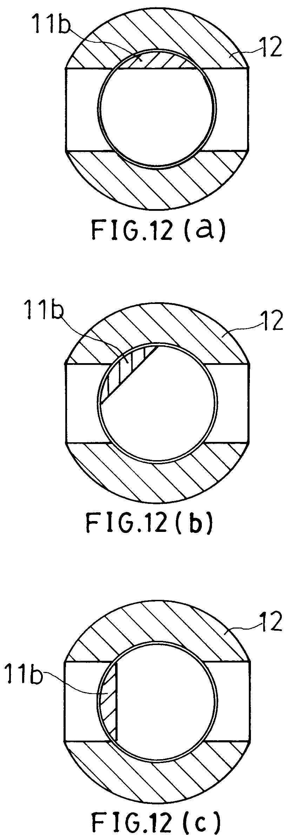

Figs. 12(a), 12(b) and 12(c) illustrate different operational positions of the flow regulating rod 11b shown in Fig. 10(a), corresponding to Figs. 9(a), 9-(b) and 9(c), respectively. That is, the operational positions shown in Fig. 12(a), 12(b) and 12(c) correspond to the rotational angles 0 degree (full open), 45 degrees, and 90 degrees (full closed), respectively, under the condition that the direction of the flow passage in the ball valve 12 is fixed.

Also in the third preferred embodiment, the ball valve 12 can be opened and closed irrespective of an opening angle of the flow passage to be regulated by the flow regulating rod 11.

## Claims

1. A ball valve assembly with a flow regulating mechanism, comprising:
   (1) a ball valve for opening and closing a flow passage, said ball valve having a hole extending in a direction intersecting said flow passage and communicating with said flow passage; and
   (2) a flow regulating member for restricting an opening of said flow passage, said flow regulating member being inserted in said hole of said ball valve so that a quantity of insertion is variable.

2. The ball valve assembly according to claim 1 further comprising a ball valve opening/closing shaft for rotating said ball valve, wherein said flow regulating member is provided in coaxial relationship with said ball valve opening/closing shaft, and is fixed to said ball valve opening/closing shaft.

3. The ball valve assembly according to claim 1 further comprising a ball valve opening/closing shaft for rotating said ball valve, wherein said flow regulating member is provided on the opposite side of said ball valve opening/closing shaft with respect to said flow passage, and is fixed independently of said ball valve opening/closing shaft.

4.  A ball valve assembly with a flow regulating mechanism, comprising:

    (1) a ball valve for opening and closing a flow passage, said ball valve having a hole extending in a direction intersecting said flow passage and communicating with said flow passage; and

    (2) a flow regulating member for regulating an opening of said flow passage, said flow regulating member being rotatably inserted in said hole of said ball valve so that rotation of said flow regulating member causes regulation of the opening of said flow passage.

5.  The ball valve assembly according to claim 4 further comprising a ball valve opening/closing shaft for rotating said ball valve, wherein said flow regulating member is provided on the opposite side of said ball valve opening/closing shaft with respect to said flow passage, and is fixed independently of said ball valve opening/closing shaft.

FIG.1

FIG.2

20

18

10

12

FIG.3

FIG.4

FIG.5

FIG.6

11a

FIG.7

FIG.8(a)

FIG.8(b)

FIG.8(c)

FIG.9(a)

FIG.9(b)

FIG.9(c)

11b

FIG.10 (a)

11c

FIG.10 (b)

FIG.11(a)

FIG.11(b)

FIG.12 (a)

FIG.12 (b)

FIG.12 (c)

European Patent
Office

**EUROPEAN SEARCH REPORT**

Application Number

EP    91 11 9670

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 526 249 (BAUSTION)<br>* the whole document *<br>--- | 1,2,3 | F16K5/06<br>F16K5/10 |
| X | EP-A-0 171 004 (RASMUSSEN)<br>* page 4, line 8 - page 5, line 24 *<br>--- | 1,2 | |
| X | EP-A-0 264 340 (HOBSON)<br>* claim 1; figure 1 *<br>--- | 4,5 | |
| X | FR-A-1 511 656 (GACHOT)<br>* the whole document *<br>----- | 4 | |

TECHNICAL FIELDS
SEARCHED (Int. Cl.5 )

F16K

The present search report has been drawn up for all claims

| Place of search | Date of completion of the search | Examiner |
|---|---|---|
| THE HAGUE | 12 MARCH 1992 | VERELST P.E.J. |